(19) Europäisches Patentamt
European Patent Office
Office européen des brevets

(11) EP 4 108 826 A1

(12) **EUROPEAN PATENT APPLICATION**
published in accordance with Art. 153(4) EPC

(43) Date of publication:
**28.12.2022 Bulletin 2022/52**

(21) Application number: **21757144.7**

(22) Date of filing: **03.02.2021**

(51) International Patent Classification (IPC):
***D06M 15/09*** *(2006.01)* ***C08K 7/04*** *(2006.01)*
***C08L 1/26*** *(2006.01)* ***C08L 29/04*** *(2006.01)*
***C08L 35/00*** *(2006.01)* ***D01F 9/08*** *(2006.01)*
***D04H 1/4209*** *(2012.01)* ***D04H 1/587*** *(2012.01)*
***D06M 15/263*** *(2006.01)* ***D06M 15/333*** *(2006.01)*
***D06M 101/00*** *(2006.01)*

(52) Cooperative Patent Classification (CPC):
**C08K 7/04; C08L 1/26; C08L 29/04; C08L 35/00; D01F 9/08; D04H 1/4209; D04H 1/587; D06M 15/09; D06M 15/263; D06M 15/333**

(86) International application number:
**PCT/JP2021/003926**

(87) International publication number:
**WO 2021/166647 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2020 JP 2020026385**

(71) Applicant: **Nissin Chemical Industry Co., Ltd.**
**Fukui 915-0802 (JP)**

(72) Inventors:
- **UCHIDA Koki**
**Echizen-shi, Fukui 915-0802 (JP)**
- **MAKI Yoshinori**
**Echizen-shi, Fukui 915-0802 (JP)**
- **MITTA Yasuhiro**
**Echizen-shi, Fukui 915-0802 (JP)**

(74) Representative: **Ter Meer Steinmeister & Partner Patentanwälte mbB**
**Nymphenburger Straße 4**
**80335 München (DE)**

(54) **BINDER FOR INORGANIC FIBERS AND INORGANIC FIBER MAT**

(57) The present invention provides: a binder for inorganic fibers, the binder being characterized by containing (B) an ammonia-modified maleic anhydride-containing copolymer at a quantity of 3 parts by mass or more relative to 100 parts by mass of (A) a cellulose ether having a viscosity at 20°C of 500 mPa·s or less when in the form of a 2 mass% aqueous solution; and an inorganic fiber mat comprising inorganic fibers treated with the binder for inorganic fibers. By using this binder for inorganic fibers, it is possible to produce an inorganic fiber mat having a high recoverability similar to that of a phenol resin, and the amount of volatile organic compounds released from the inorganic fiber mat is extremely low.

EP 4 108 826 A1

## Description

### TECHNICAL FIELD

The present invention relates to a binder for inorganic fibers, particularly a binder for inorganic fibers which, in inorganic fiber mats suitable for use as, for example, thermal insulation or acoustic insulation in construction, has an extremely low emissions of volatile organic compounds, possesses sufficient thickness, and imparts an excellent recovery. The invention also relates to an inorganic fiber mat treated with such a binder.

### BACKGROUND ART

Inorganic fiber mats made of inorganic fibers such as glass wool or rock wool are widely used as thermal insulation and acoustic insulation in industrial and housing applications. Inorganic fiber mats are generally produced by using a binder which contains a water-soluble phenolic resin as the principal component to fix together inorganic fibers and form them into a mat (see, for example, JP-A S58-070760; Patent Document 1).

However, because formaldehyde is generally used as the crosslinking agent for the water-soluble phenolic resin serving as the principal component in such binders, when the binder is heat-cured, unreacted formaldehyde ends up remaining in the inorganic fiber mat. Another problem is that, even after curing has taken place, formaldehyde is generated as binder hydrolysis and condensation reactions continue to proceed. In such cases, the formaldehyde is released from the surface and sides of the inorganic fiber mat following production.

The contamination of indoor air by volatile organic compounds (VOCs) such as formaldehyde which readily volatilize in air at normal temperature and pressure has become apparent in recent years. At the same time, health hazards such as sick building syndrome, one cause of which is VOCs, have become a serious concern. For this reason, formaldehyde emissions by construction materials are restricted by law, the thought being that an effective way to minimize emissions of formaldehyde and other VOCs from building materials is to make the content of such compounds exceedingly low.

Because the VOCs released from inorganic fiber mats consist largely of the formaldehyde included in the binder, in order to resolve the above problems, the composition used as the binder needs to be a formaldehyde-free composition. However, inorganic fiber mats in which conventional binders containing a phenolic resin as the principal component are used have low raw material costs, in addition to which the recovery ratio of such mats is outstanding. It is thus necessary, when using a binder which contains a formaldehyde-free composition as the principal component, for such a binder to have the same performance as conventional binders. Yet, endowing such binders with a comparable performance has been difficult.

To address these problems, JP-A 2005-299013 (Patent Document 2) discloses a binder containing an acrylic resin-based emulsion as the principal component, and JP-A 2006-089906 (Patent Document 3) discloses a binder made of a vinyl copolymer having functional groups such as carboxyl groups. However, the recovery ratio of inorganic fiber mats obtained using these binders is inferior to that of inorganic fiber mats obtained using water-soluble phenolic resin-containing binders. In addition, the present applicant has disclosed, in JP-A 2011-153395 (Patent Document 4), a binder which includes a hydroxyl group-containing water-soluble polymer compound and a boron compound. Inorganic fiber mats obtained using this binder successfully resolve the problem of VOCs, but have a recovery ratio that is somewhat inferior to inorganic fiber mats made using water-soluble phenolic resins.

WO 2005/092814 (Patent Document 5) discloses an unsaturated copolymer of maleic anhydride and an unsaturated monomer (specifically, an unsaturated copolymer of maleic anhydride and butadiene), JP-A 2012-136385 (Patent Document 6) discloses a copolymer compound of maleic anhydride and an acrylic ester, JP-A 2016-108707 (Patent Document 7) and JP-A 2016-108708 (Patent Document 8) disclose maleic acid copolymers (which appear to be methyl vinyl ether/maleic anhydride copolymer monoalkyl esters), and JP-A S60-046951 (Patent Document 9) discloses an isobutylene-maleic anhydride copolymer. Inorganic fiber mats made of inorganic fibers are produced by spraying a low concentration water-soluble binder onto melt-spun glass, but the foregoing compounds all have poor solubilities in water and so it has not always been possible to obtain a suitable water-soluble binder.

### PRIOR ART DOCUMENTS

### PATENT DOCUMENTS

Patent Document 1: JP-A S58-070760

Patent Document 2: JP-A 2005-299013

Patent Document 3: JP-A 2006 089906

Patent Document 4: JP-A 2011-153395

Patent Document 5: WO 2005/092814

Patent Document 6: JP-A 2012-136385

Patent Document 7: JP-A 2016-108707

Patent Document 8: JP-A 2016-108708

Patent Document 9: JP-A S60-046951

## SUMMARY OF INVENTION

## TECHNICAL PROBLEM

In view of the above circumstances, an object of the present invention is to provide a binder for inorganic fibers that is capable producing an inorganic fiber mat having an excellent recovery. A further object is to provide an inorganic fiber mat treated with such a binder.

## SOLUTION TO PROBLEM

The inventors have conducted extensive investigations aimed at achieving these objects. As a result, they have discovered that a binder containing cellulose ether and an ammonia-modified maleic anhydride-containing copolymer imparts to an inorganic fiber mat a recovery ratio comparable to that imparted by phenolic resins, and is able to achieve an exceedingly low level of VOC emissions. This discovery ultimately led to the present invention.
Accordingly, this invention provides the following binder for inorganic fibers and the following inorganic fiber mat treated with such a binder.

1. A binder for inorganic fibers, which binder includes:

   (A) 100 parts by weight of cellulose ether having a viscosity at 20°C of 500 mPa·s or less in a 2% by weight aqueous solution, and
   (B) at least 3 parts by weight of an ammonia-modified maleic anhydride-containing copolymer.

2. The inorganic fiber binder of 1 above, wherein the cellulose ether (A) includes at least one selected from the group consisting of methyl cellulose, ethyl cellulose, ethyl methyl cellulose, carboxymethyl cellulose, hydroxyethyl cellulose, and hydroxypropyl cellulose.
3. The inorganic fiber binder of 1 or 2 above, wherein the ammonia-modified maleic anhydride-containing copolymer (B) has a weight average molecular weight of from 50,000 to 300,000 and has a specific structural formula described below.
4. The inorganic fiber binder of any one of 1 to 3 above, wherein the ammonia-modified maleic anhydride-containing copolymer (B) is an ammonia-modified isobutylene-maleic anhydride copolymer.
5. The inorganic fiber binder of any one of 1 to 4 above, further including (C) a polyvinyl alcohol resin having a degree of polymerization of from 100 to 3,500.
6. The inorganic fiber binder of 5 above, wherein the polyvinyl alcohol resin (C) has a degree of saponification of at least 70 mol%.
7. The inorganic fiber binder of any one of 1 to 6 above, wherein the inorganic fibers are glass wool or rock wool.
8. The inorganic fiber binder of any one of 1 to 7 above, wherein the inorganic fiber is dissolved in water and used as an aqueous solution of the inorganic fiber binder, and the aqueous solution of the inorganic fiber binder has a viscosity at 20°C of 1 to 100 mPa·s.
9. An inorganic fiber mat including inorganic fibers treated with the inorganic fiber binder of any one of 1 to 8 above.

## ADVANTAGEOUS EFFECTS OF INVENTION

Inorganic fiber mats having a high recovery ratio can be produced by using the inorganic fiber binder of the invention.

## BRIEF DESCRIPTION OF DRAWINGS

[FIG. 1] FIG. 1 is a schematic diagram showing a process for manufacturing an inorganic fiber mat using the inorganic fiber binder of the invention.
[FIG. 2] FIG. 2 is a perspective view showing a process for applying the inorganic fiber binder of the invention onto inorganic fibers.

## DESCRIPTION OF EMBODIMENTS

The invention is described in detail below.
The binder for inorganic fibers of the invention is an inorganic fiber binder characterized by including components (A) and (B) below:

(A) 100 parts by weight of cellulose ether having a viscosity of 500 mPa·s or less in a 2% by weight aqueous solution, and
(B) at least 3 parts by weight of an ammonia-modified maleic anhydride-containing copolymer.

A polymer having a desired viscosity may be used as the cellulose ether which is component (A), but the viscosity of the 2% by weight aqueous solution is 500 mPa·s or less, and preferably 100 mPa·s or less. More preferably, the viscosity is 20 mPa·s or less. The lower limit of the viscosity is not particularly limited, but is preferably at least 1 mPa·s. The viscosity of the 2% by weight aqueous solution is a value measured at 20°C with a B-type viscometer. If the viscosity of the 2% by weight aqueous solution exceeds 500 mPa·s, unfavorable effects may arise. For example, poor application by spraying may occur, as a result of which the required pickup may not be obtained, and sufficient recoverability may not be attainable in the inorganic fiber mat.
The weight average molecular weight of the cellulose ether as component (A) is preferably 100,000 or less, more preferably 30,000 or less. If the weight average molecular weight exceeds 100,000, unfavorable effects may arise. For example, poor application by spraying may occur, as a result of which the required pickup may not be obtained, and sufficient recoverability may not be attainable in the inorganic fiber mat. This weight average molecular weight is the polystyrene-equivalent value obtained by aqueous gel permeation chromatography (GPC).
The cellulose ether as component (A) is preferably at least one selected from the group of methyl cellulose, ethyl cellulose, ethyl methyl cellulose, carboxymethyl cellulose, hydroxyethyl cellulose, hydroxyethyl methyl cellulose, and hydroxypropyl cellulose. In particular, it is preferable to use a water-soluble cellulose ether. In addition, those obtained by substituting some of the hydrogen atoms on the hydroxy group of the cellulose with methyl, hydroxypropyl, hydroxyethyl, carboxymethyl, or similar groups can be used.
The ammonia-modified maleic anhydride-containing copolymer as component (B) functions as a crosslinking agent in the present invention. This ammonia-modified maleic anhydride-containing copolymer as component (B) is exemplified by, but not particularly limited to, copolymers of the following general formula.

[Chem. 1]

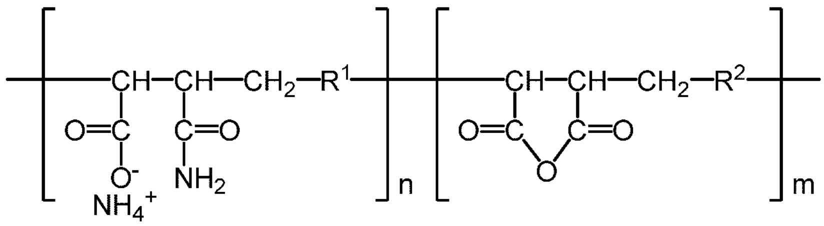

In this formula, $R^1$ and $R^2$ are each independently a linear or branched alkylene group of 2 to 5 carbon atoms and may have one or two unsaturated groups. Examples include ethylene, propylene, isopropylene, n-butylene, isobutylene, ethylene-propylene, and butadiene groups. $R^1$ and $R^2$ may be the same or different.

Examples of component (B) include ammonia-modified copolymers of maleic anhydride with isobutylene, isopropylene, ethylene, ethylene-propylene, or butadiene. Ammonia-modified isobutylene-maleic anhydride copolymers of the following structural formula are especially preferred.

[Chem. 2]

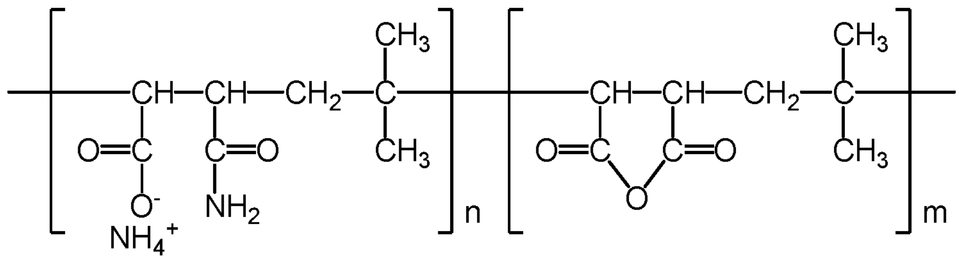

The ammonia-modified maleic anhydride-containing copolymer as component (B) has a weight average molecular weight that is preferably from 50,000 to 300,000, more preferably from 50,000 to 200,000, and most preferably from 50,000 to 100,000. This weight average molecular weight is the polystyrene-equivalent value obtained by aqueous gel permeation chromatography (GPC).

The subscripts n and m in the formula represent weight percentages, with n being preferably from 50 to 90% by weight, and more preferably from 70 to 80% by weight based on 100% by weight of n and m combined (n+m).

The content of the ammonia-modified maleic anhydride-containing copolymer as component (B) is at least 3 parts by weight, preferably at least 4 parts by weight, and more preferably at least 5 parts by weight per 100 parts by weight of the cellulose ether as component (A), and the upper limit is preferably 20 parts by weight or less, and more preferably 10 parts by weight or less. At an ammonia-modified maleic anhydride-containing copolymer content below 3 parts by weight, unfavorable effects such as insufficient crosslinkability may arise. At a content greater than 20 parts by weight, the miscibility with the cellulose ether as component (A) poses no problems, but the aqueous treatment solution of the binder takes on a yellow coloration, which may lower the product quality. Also, such a high content may lead to higher costs.

A commercial product may be used as the maleic acid-containing copolymer which is component (B). One such example is "ISOBAM" from Kuraray Co., Ltd.

Furthermore, the inorganic fiber binder of the present invention may contain a polyvinyl alcohol resin as component (C) from the viewpoints of improving application by spraying and improving poor filter passability due to insoluble matters. The polyvinyl alcohol resin (C) has a degree of polymerization of from 100 to 3,500, preferably from 100 to 2,000, and more preferably from 200 to 1,800. If the degree of polymerization is more than 3,500, unfavorable effects may arise. For example, poor application by spraying may occur, as a result of which the required pickup may not be obtained, and sufficient recoverability may not be attainable in the inorganic fiber mat. If the degree of polymerization is below 100, unfavorable effects may arise, such as an inability to achieve sufficient recoverability in the inorganic fiber mat. The above degree of polymerization is the weight average degree of polymerization obtained as a polystyrene-equivalent value by aqueous gel permeation chromatography (GPC). Also, the degree of saponification of the polyvinyl alcohol resin, based on the test method in JIS K 6726, is preferably at least 70 mol%, and more preferably at least 80 mol%; the upper limit is preferably less than 99.5 mol%. If the degree of saponification is 99.5 mol% or more, the rise in viscosity at low temperatures may increase and gelation may occur.

A commercial product may be used as the polyvinyl alcohol resin which is component (C). One such example is "Poval (PVA)" from Japan Vam & Poval Co., Ltd.

If the polyvinyl alcohol resin (C) is contained, the content of the polyvinyl alcohol resin is preferably at least 5 parts by weight, more preferably at least 10 parts by weight per 100 parts by weight of the cellulose ether (A), and the upper limit is preferably 900 parts by weight or less, more preferably 250 parts by weight or less, still more preferably 100 parts by weight or less, and most preferably 50 parts by weight or less. If the compounding amount exceeds 900 parts by weight, the mat recoverability may decline, which is undesirable. In addition, if the compounding amount is less than 10 parts by weight, unfavorable effects may arise. For example, poor application by spraying and poor filter passing due to an insoluble matter may occur, as a result of which the required pickup may not be obtained, and sufficient recoverability may not be attainable in the inorganic fiber mat.

The inorganic fiber binder of the present invention contains (A) cellulose ether, (B) an ammonia-modified maleic anhydride-containing copolymer, and optionally (C) a polyvinyl alcohol resin as constituent components, and the total amount of these constituent components is preferably at least 90% by weight, more preferably at least 95% by weight,

and most preferably 100% by weight based on 100% by weight of the inorganic fiber binder (composition). As other components, additives such as water-retaining materials (e.g., urea), silane coupling agents, water repellents, pH adjustors, and colorants may be optionally added. The amounts of these additives added may be set as desired within ranges that do not detract from the advantageous effects of the invention. By mixing these components, the binder is obtained.

The inorganic fiber binder of the invention is preferably dissolved in water and used as an aqueous solution of the inorganic fiber binder. The aqueous solution of the inorganic fiber binder has a viscosity at 20°C that is preferably from 1 to 100 mPa·s, and especially from 1 to 50 mPa·s. This viscosity is a measured value obtained with a rotational viscometer. At a viscosity greater than 100 mPa·s, spraying (discharging) is poor and the amount of adhering binder (binder pickup) following treatment decreases, as a result of which it may be impossible to exhibit the advantageous effects of the invention. Also, the concentration is preferably 10% by weight or less, more preferably 5% by weight or less, and most preferably 3% by weight or less.

The aqueous solution of the inorganic fiber binder has a pH that is preferably from 4 to 10. At a pH outside of this range, the crosslinkability changes, which may have an effect on the recoverability.

It is preferable that the aqueous solution of the inorganic fiber binder not generate formaldehyde. For example, JIS A 9504 divides the formaldehyde emission rate into the three levels: F☆☆ to F☆☆☆☆. These represent formaldehyde emission rates of, respectively, up to 5 $\mu g/m^2 \cdot h$ (F☆☆☆☆), more than 5 $\mu g/m^2 \cdot h$ and up to 20 $\mu g/m^2 \cdot h$ (F☆☆☆), and more than 20 $\mu g/m^2 \cdot h$ and up to 120 $\mu g/m^2 \cdot h$ (F☆☆). The best level is F☆☆☆☆. Using the inorganic fiber binder of the invention, inorganic fiber mats of the F☆☆☆☆ level to be described below can be produced.

The inorganic fiber binder of the invention may be used on various inorganic fibers, and exhibits advantageous effects that are particularly outstanding on glass wool and rock wool.

The inorganic fiber mat of the invention is formed by treating inorganic fibers with the above inorganic fiber binder. The inorganic fibers used in the inorganic fiber mat are not particularly limited, although glass wool or rock wool is preferred.

The fiberization method employed to form the inorganic fibers may be a known method such as one that involves the application of centrifugal force or blowing. The inorganic fiber mat may be of a density such as that used in ordinary thermal insulating or acoustic insulation. The mat density is preferably 40 $kg/m^3$ or less, and more preferably 32 $kg/m^3$ or less. The thickness of the inorganic fiber to be used may be a desired thickness, but is preferably selected from a thickness of 1 to 20 $\mu m$.

The inorganic fiber binder is used in an amount, expressed as a solids ratio with respect to the inorganic fibers that is preferably from 1 to 10% by weight, and more preferably from 1 to 5% by weight. At less than 1% by weight, the inorganic fiber mat formed may have a poor recoverability. At more than 10% by weight, undesirable effects such as the formation of a firmly crushed inorganic fiber mat may arise.

An example of a method for producing an inorganic fiber mat using the inorganic fiber binder of the invention is described below while referring to FIGS. 1 and 2. FIG. 1 is a schematic diagram showing a process for manufacturing an inorganic fiber mat using the inorganic fiber binder of the invention, and FIG. 2 is a perspective view showing a process for applying the inorganic fiber binder of the invention onto inorganic fibers.

First, a fiberization step that spins out inorganic fibers such as glass wool from a fiberizing device 1 is carried out. Here, the method of fiberization with the fiberizing device 1 is exemplified by, without particular limitation, known methods such as centrifugation techniques and blowing techniques. Depending on the density, the thickness and the width in the crosswise direction of the inorganic fiber mat 7 to be manufactured, it is also possible to provide a plurality of fiberizing devices 1.

Next, as shown in FIG. 2, the binder of the invention is applied by binder applicators 2 onto the inorganic fibers 3 discharged from the fiberizing devices 1. A hitherto known method may be used to apply the binder. For example, the binder may be applied by spraying on or dipping in the aqueous binder solution described above. Treatment is carried out by depositing the binder primarily at points of intersection between the fibers and also at places other than such intersections, either directly from above the fibers or at an angle.

Also shown is a conveyor 41, which is an apparatus that stacks onto a perforated conveyor the inorganic fibers 3 on which uncured binder has been deposited. In order to uniformly stack the fibers, the conveyor 41 is preferably a perforated conveyor equipped with a suction unit.

As used herein, the "pickup" of binder in the invention refers to an amount measured by what is called the "loss of ignition (LOI)" method and signifies the weight of the material that is lost when a dry sample of the inorganic fiber mat following binder deposition is ignited at about 550°C × sec.

The inorganic fibers 3 to which binder has been applied in the above step are piled onto the conveyor 41 disposed below the fiberizing devices 1 and successively move to another conveyor 42 that is arranged in the direction of the production line. The piled inorganic fibers 3, while being compressed to a predetermined thickness by the latter conveyor 42 and yet another conveyor 5 disposed above and opposite thereto across a predetermined interval, then enter a forming oven 6 situated at the positions of conveyors 42 and 5.

In the forming oven 6, the inventive binder that has been applied to the inorganic fibers 3 heat cures, forming an inorganic fiber mat 7 of a predetermined thickness. The processing conditions will vary considerably depending on the length of the production line and other parameters, and so should be set as appropriate. For example, in the examples of the invention described below, the heating temperature is preferably between 150°C and 300°C, and more preferably between 180°C and 250°C. At a heating temperature below 150°C, moisture in the inorganic fiber mat 7 may not completely evaporate; at a heating temperature above 300°C, the binder with which the inorganic fiber mat 7 has been treated may carbonize. Also, the heating time is preferably from 120 to 360 seconds, and more preferably from 180 to 300 seconds. At a heating time shorter than 120 seconds, moisture in the inorganic fiber mat 7 may not completely evaporate; at a heating time longer than 360 seconds, the binder with which the inorganic fiber mat 7 has been treated may carbonize. The formed inorganic fiber mat 7 is subsequently cut to predetermined product dimensions with a cutter 8 stationed at another conveyor 43, following which it is carried away by yet another conveyor 44 and then wrapped and packaged.

The inventive inorganic fiber mat that has been produced in this way has an excellent recovery ratio compared with inorganic fiber mats treated with conventional binders such as phenolic resins that have hitherto been disclosed in the art, yet the amount of VOCs released from this inorganic fiber mat is extremely low.

Using the inorganic fiber binder of the invention, inorganic fiber mats of the F☆☆☆☆ level can be produced.

As used herein, the "recovery ratio" of the inorganic fiber mat of the invention is defined as the ratio of the thickness of the inorganic fiber mat when compressed under the application of an external force and then allowed to recover by release of the force to the thickness of the inorganic fiber mat prior to compression. To increase the efficiency of storage and transport, at least a given number of inorganic fiber mats are sometimes compressed and packaged together. For this reason, in cases where the thickness prior to compression cannot be restored in an inorganic fiber mat after being unpacked, i.e., in cases where the inorganic fiber mat has a poor recovery ratio, the intended performance, including thermal insulating properties and sound insulating properties, may not be fully achievable.

## EXAMPLES

Production Examples, Examples of the invention and Comparative Examples are given below to more concretely illustrate the invention, although the invention is not limited by these Examples. In the Examples below, "parts" and "%" are both by weight.

[Examples 1 to 6]

An aqueous solution of an inorganic fiber binder having a concentration of 2 wt% (sometimes referred to as "treatment solution") was prepared by dissolving 100 parts of the cellulose ether and 5 parts of the ammonia-modified isobutylene-maleic anhydride copolymer shown in Table 1 in deionized water. Using glass wool having length × width × thickness dimensions of 10 cm × 10 cm × 0.5 cm and a density of 0.025 g/cm$^3$ as the inorganic fibers, the glass wool was treated by the spray application of the aqueous solution of inorganic fiber binder prepared above and dried by heating under treatment conditions of 200°C and 300 seconds in the Examples, thereby fabricating 12 inorganic fiber mats. These were stacked to an inorganic fiber mat thickness of 10 cm, giving an inorganic fiber mat with a density of 0.015 g/cm$^3$. The amount (adhesion amount) of the inorganic fiber binder used in the inorganic fiber mat was adjusted so as to be 4 wt% expressed as the solids ratio with respect to the inorganic fiber based on the weight of the inorganic fiber mat following treatment.

[Examples 7 to 9]

Aside from using 90 parts of the cellulose ether, 10 parts of the polyvinyl alcohol, and 5 parts of the ammonia-modified isobutylene-maleic anhydride copolymer shown in Table 1, aqueous solutions of inorganic fiber binders were prepared and inorganic fiber mats were fabricated by the same production method as in Example 1.

[Examples 10 to 13]

Aside from using the cellulose ether and the polyvinyl alcohol of Example 7 in a ratio of 70:30, 50:50, 30:70, and 10:90, respectively, aqueous solutions of inorganic fiber binders were prepared and inorganic fiber mats were fabricated by the same production method as in Example 1.

[Examples 14 and 15]

Aside from setting the amount of the ammonia-modified isobutylene-maleic anhydride copolymer of Example

1 to 3 parts and 10 parts, respectively, aqueous solutions of inorganic fiber binders were prepared and inorganic fiber mats were fabricated by the same production method as in Example 1.

[Example 16]

Aside from changing the ammonia-modified isobutylene-maleic anhydride copolymer "ISOBAM-104" of Example 1 to "ISOBAM-110", an aqueous solution of an inorganic fiber binder was prepared and an inorganic fiber mat was fabricated by the same production method as in Example 1.

[Comparative Example 1]

Aside from using a phenol resin "FG-1032" (water-soluble phenol: from DIC Corporation) instead of cellulose ether, an aqueous solution of an inorganic fiber binder was prepared and an inorganic fiber mat was fabricated by the same method as in Example 1.

[Comparative Example 2]

Aside from setting the amount of the ammonia-modified isobutylene-maleic anhydride copolymer of Example 1 to 1 part, an aqueous solution of an inorganic fiber binder was prepared and an inorganic fiber mat was fabricated by the same production method as in Example 1.

[Comparative Example 3]

Aside from using polyvinyl alcohol instead of the cellulose ether of Example 1, an aqueous solution of an inorganic fiber binder was prepared and an inorganic fiber mat was fabricated by the same production method as in Example 1.

[Evaluation Method]

The viscosity, PH, formaldehyde concentration, storage stability, spraying suitability, and filter passability of the aqueous solutions of the inorganic fiber binders (treatment solutions) in Examples 1 to 16 and Comparative Examples 1 to 3 were measured.

In addition, the recovery ratio speed of the inorganic fiber mats of Examples 1 to 16 and Comparative Examples 1 to 3 was measured.

<Viscosity of Treatment Solution>

The viscosity of the aqueous solution of the inorganic fiber binder having a concentration of 2 wt% was measured at 20°C with a B-type viscometer.

<PH of Treatment Solution>

The PH of the aqueous solution of the inorganic fiber binder having a concentration of 2 wt% was measured at 20°C by a glass electrode method.

<Formaldehyde Concentration of Treatment Solution>

Using a method based on the MBTH colorimetric method, the "PACKTEST Formaldehyde" (model WAK-FOR) K-1 reagent (one small pack) from Kyoritsu Chemical-Check Lab., Corp. is added to 1.5 mL of the treatment solution, following which the solution is shaken 5 or 6 times at room temperature to effect a reaction and is then left at rest for 3 minutes. The entire volume is then drawn up into a polyethylene tube, shaken 5 or 6 times to bring about coloration and then left at rest for one minute. After being left at rest, the color of the sample is compared with standard colors and the concentration (color) close to a reference color is measured. The results are presented in Table 1.

<Storage Stability of Treatment Solution>

The condition of the treatment solution after being left at rest for one month at normal temperature was visually examined.

○: Separation was not observed in the treatment solution.
×: The treatment solution separated or gelled.

If the treatment solution separates or gels, nozzle clogging may occur, making spray application impossible.

<Spraying Suitability>

The discharged amount and coating unevenness when the treatment solution was discharged from a spray (trigger type) were examined.

○: A specified amount can be uniformly discharged.
△: Discharged amount and coating are uneven.
×: Discharging is not possible.

<Filter Passability>

After the treatment solution was passed through a filter (300 mesh), the product collected on the filter was observed.

○: The amount of the product collected on the filter is less than 0.1% based on the total amount of the treatment solution.

△: The product collected on the filter is 0.1% or more and less than 1.0% based on the total amount of the treatment solution.

×: The product collected on the filter is 1.0% or more based on the total amount of the treatment solution.

<Recovery Ratio of Inorganic Fiber Mat>

During inorganic fiber mat production, 10 cm × 10 cm × 10 cm samples were removed, a 20 kg load was applied to the samples for one hour, the thickness (dx) of the inorganic fiber mat after loading was measured, and the recovery ratio was determined from formula (1) below for five samples (n = 5). The results are presented in Table 1.
The recovery ratio is preferably at least 65%, and more preferably at least 70%.

$$R = (dx/d) \times 100 \qquad (1)$$

wherein R: recovery ratio (%)

dx: thickness of inorganic fiber mat following recovery (mm)
d: nominal thickness of inorganic fiber mat prior to test (mm)

[Table 1]

| Formulation (pbw) | | Example | | | | | | | | | | | | | | | | Comparative Example | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 | 2 | 3 |
| (A) | METROSE SM-4 | 100 | | | | | | 90 | 90 | 90 | 70 | 50 | 30 | 10 | 100 | 100 | 100 | | 100 | |
| | METROSE SM-100 | | 100 | | | | | | | | | | | | | | | | | |
| | METROSE 60SH-03 | | | 100 | | | | | | | | | | | | | | | | |
| | METROSE 60SH-50 | | | | 100 | | | | | | | | | | | | | | | |
| | CELLOGEN 5A | | | | | 100 | | | | | | | | | | | | | | |
| | CELLOGEN 7A | | | | | | 100 | | | | | | | | | | | | | |
| (B) | ISOBAM-104 | 5 | 5 | 5 | 5 | 5 | 5 | 5 | 5 | 5 | 5 | 5 | 5 | 5 | 3 | 10 | | | 1 | 5 |
| | ISOBAM-110 | | | | | | | | | | | | | | | | 5 | | | |
| (C) | JP-05 | | | | | | | 10 | | | 30 | 50 | 70 | 90 | | | | | | 100 |
| | JM-17 | | | | | | | | 10 | | | | | | | | | | | |
| | JC-25 | | | | | | | | | 10 | | | | | | | | | | |
| FG-1032 | | | | | | | | | | | | | | | | | | 100 | | |
| Evaluations | Viscosity at 20°C | <5 | 100 | <5 | 50 | <5 | 20 | <5 | <10 | <10 | <5 | <5 | <5 | <5 | <5 | <5 | <5 | <5 | <5 | <5 |
| | PH at 20°C | 7 | 7 | 7 | 7 | 7 | 7 | 7 | 7 | 7 | 7 | 7 | 7 | 7 | 7 | 7 | 7 | 7 | 7 | 7 |
| | Formaldehyde concentration (mg/L) | <0.2 | <0.2 | <0.2 | <0.2 | <0.2 | <0.2 | <0.2 | <0.2 | <0.2 | <0.2 | <0.2 | <0.2 | <0.2 | <0.2 | <0.2 | <0.2 | 2< | <0.2 | <0.2 |
| | Storage stability | ○ | ○ | ○ | ○ | ○ | ○ | ○ | ○ | ○ | ○ | ○ | ○ | ○ | ○ | ○ | ○ | × | ○ | ○ |
| | Spraying suitability | △ | △ | △ | △ | △ | △ | ○ | ○ | ○ | ○ | ○ | ○ | ○ | △ | △ | △ | ○ | △ | ○ |
| | Filter passability | △ | △ | △ | △ | △ | △ | ○ | ○ | ○ | ○ | ○ | ○ | ○ | △ | △ | △ | ○ | △ | ○ |
| | Recovery ratio (%) | 70 | 71 | 71 | 72 | 74 | 74 | 70 | 73 | 73 | 70 | 69 | 68 | 66 | 69 | 71 | 70 | 71 | 59 | 60 |

** The compounding ratios are based on the solids.

Details on the cellulose ether in the table are as follows.

- "METROSE SM-4" (methyl cellulose from Shin-Etsu Chemical Co., Ltd., viscosity of 2 wt% aqueous solution: 5 mPa·s or less, degree of methoxy group substitution: 1.8)
- "METROSE SM-100" (methyl cellulose from Shin-Etsu Chemical Co., Ltd., viscosity of 2 wt% aqueous solution: 100 mPa·s, degree of methoxy group substitution: 1.8)
- "METROSE 60SH-03" (hydroxypropyl methyl cellulose from Shin-Etsu Chemical Co., Ltd., viscosity of 2% aqueous

solution: 5 mPa·s or less, degree of methoxy group substitution: 1.9, molar substitution of hydroxypropoxy group: 0.25)

- "METROSE 60SH-50" (hydroxypropyl methyl cellulose from Shin-Etsu Chemical Co., Ltd., viscosity of 2 wt% aqueous solution: 50 mPa·s, degree of methoxy group substitution: 1.9, molar substitution of hydroxypropoxy group: 0.25)
- "CELLOGEN 5A" (carboxymethyl cellulose from DKS Co. Ltd., viscosity of 2 wt% aqueous solution: 5 mPa·s or less, degree of carboxymethyl group substitution: 0.75)
- "CELLOGEN 7A" (carboxymethyl cellulose from DKS Co. Ltd., viscosity of 2 wt% aqueous solution: 20 mPa·s, degree of carboxymethyl group substitution: 0.75)

The viscosity of the 2 wt% aqueous solution was measured at 20°C with a B-type viscometer.

The degree of methoxy group substitution is the average number of hydroxy groups substituted with methoxy groups per glucose ring unit on the cellulose. The molar substitution is the average moles of hydroxypropoxy groups or hydroxyethoxy groups added per glucose ring unit on the cellulose.

Details on the polyvinyl alcohols in the table are as follows.

- "JP-05" (partially saponified Poval: degree of saponification, 87 to 89%; degree of polymerization, 500)
- "JM-17" (intermediately saponified Poval: degree of saponification, 95 to 97%; degree of polymerization, 1,700)
- "JC-25" (completely saponified Poval: degree of saponification, 99 to 99.4%; degree of polymerization, 2,500)

All of the above products are from Japan Vam & Poval Co., Ltd.

"ISOBAM-104" in the table is an ammonia-modified isobutylene-maleic anhydride copolymer from Kuraray Co., Ltd., and has the following chemical structural formula and a weight average molecular weight of from 55,000 to 65,000. Herein n = 70 to 80 wt% and m = 20 to 30 wt%.

[Chem. 3]

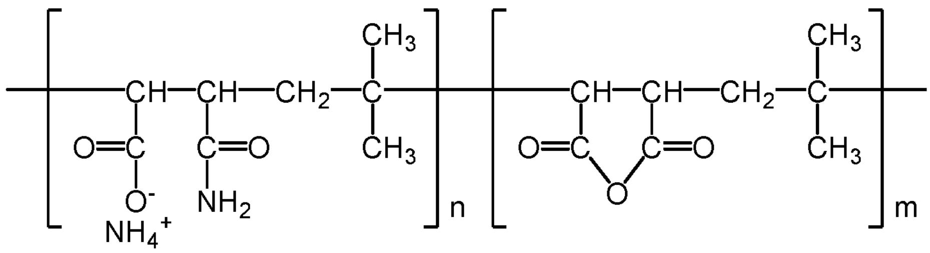

"ISOBAM-110" in the table is an ammonia-modified isobutylene-maleic anhydride copolymer from Kuraray Co., Ltd., and has the following chemical structural formula and a weight average molecular weight of from 160,000 to 170,000. Herein n = 70 to 80 wt% and m = 20 to 30 wt%.

[Chem. 4]

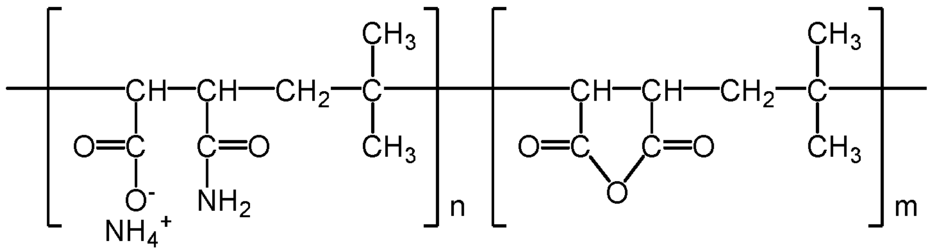

REFERENCE SIGNS LIST

| | |
|---|---|
| 1 | Fiberizing devices |
| 2 | Binder applicators |
| 3 | Inorganic fibers |
| 41,42,43,44,5 | Conveyors |
| 6 | Forming oven |

| | |
|---|---|
| 7 | Inorganic fiber mat |
| 8 | Cutter |

## Claims

1. A binder for inorganic fibers, comprising:

   (A) 100 parts by weight of cellulose ether having a viscosity at 20°C of 500 mPa·s or less in a 2% by weight aqueous solution, and
   (B) at least 3 parts by weight of an ammonia-modified maleic anhydride-containing copolymer.

2. The inorganic fiber binder of claim 1, wherein the cellulose ether (A) includes at least one selected from the group consisting of methyl cellulose, ethyl cellulose, ethyl methyl cellulose, carboxymethyl cellulose, hydroxyethyl cellulose, and hydroxypropyl cellulose.

3. The inorganic fiber binder of claim 1 or 2, wherein the ammonia-modified maleic anhydride-containing copolymer (B) has a weight average molecular weight of from 50,000 to 300,000 and has the following structural formula:

[Chem. 1]

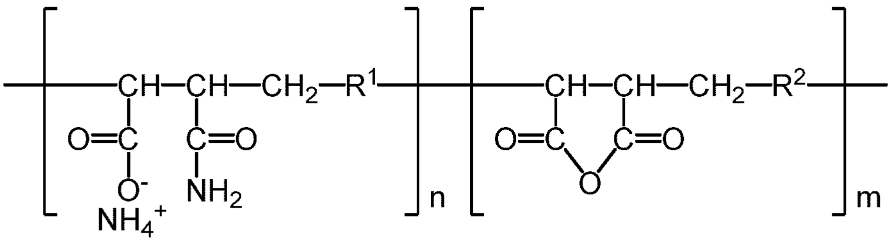

(wherein $R^1$ and $R^2$ are each independently a linear or branched alkylene group of 2 to 5 carbon atoms and n and m are positive numbers, a content n being from 50 to 90% by weight based on 100% by weight of n and m combined (n+m)).

4. The inorganic fiber binder of any one of claims 1 to 3, wherein the ammonia-modified maleic anhydride-containing copolymer (B) is an ammonia-modified isobutylene-maleic anhydride copolymer.

5. The inorganic fiber binder of any one of claims 1 to 4, further comprising (C) a polyvinyl alcohol resin having a degree of polymerization of from 100 to 3,500.

6. The inorganic fiber binder of claim 5, wherein the polyvinyl alcohol resin (C) has a degree of saponification of at least 70 mol%.

7. The inorganic fiber binder of any one of claims 1 to 6, wherein the inorganic fibers are glass wool or rock wool.

8. The inorganic fiber binder of any one of claims 1 to 7, wherein the inorganic fiber is dissolved in water and used as an aqueous solution of the inorganic fiber binder, and the aqueous solution of the inorganic fiber binder has a viscosity at 20°C of 1 to 100 mPa·s.

9. An inorganic fiber mat comprising inorganic fibers treated with the inorganic fiber binder of any one of claims 1 to 8.

FIG.1

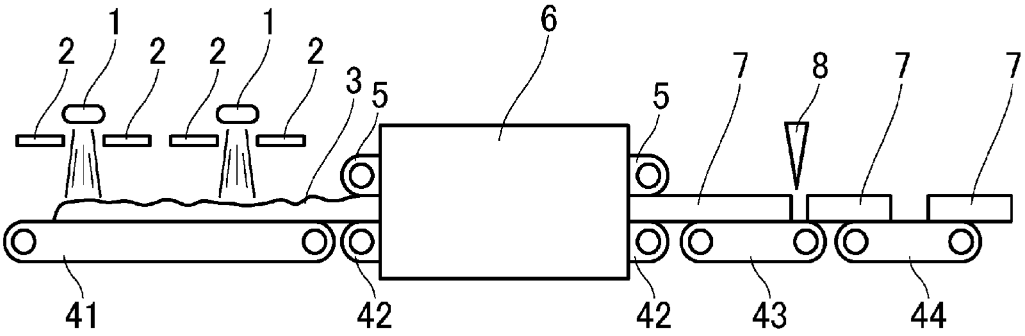


FIG.2

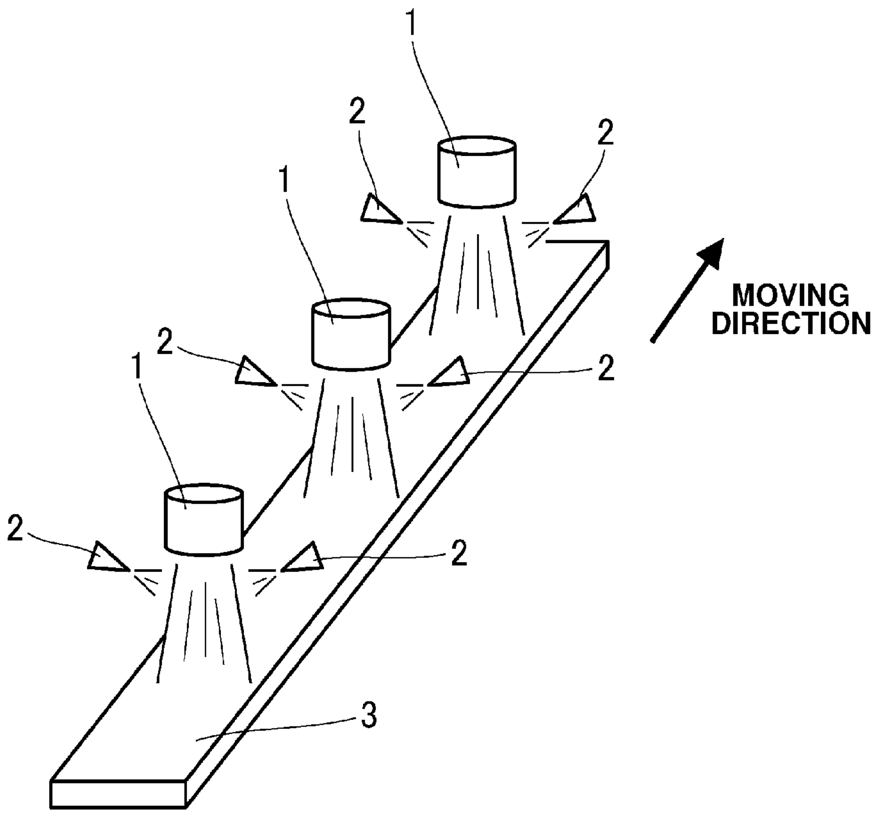

## INTERNATIONAL SEARCH REPORT

International application No.
PCT/JP2021/003926

A. CLASSIFICATION OF SUBJECT MATTER
D06M 15/09(2006.01)i; C08K 7/04(2006.01)i; C08L 1/26(2006.01)i; C08L 29/04(2006.01)i; C08L 35/00(2006.01)i; D01F 9/08(2006.01)i; D04H 1/4209(2012.01)i; D04H 1/587(2012.01)i; D06M 15/263(2006.01)i; D06M 15/333(2006.01)i; D06M 101/00(2006.01)n
FI: D06M15/09; C08K7/04; C08L1/26; C08L29/04 B; C08L35/00; D01F9/08 Z; D04H1/4209; D04H1/587; D06M15/263; D06M15/333; D06M101:00
According to International Patent Classification (IPC) or to both national classification and IPC

B. FIELDS SEARCHED
Minimum documentation searched (classification system followed by classification symbols)
D06M13/00-15/715; D04H1/00-18/04; C08K3/00-13/08; C08L1 /00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-506731 A (AKZO NOBEL N.V.) 03 March 2011 (2011-03-03) claims, paragraphs [0021], [0036], examples 2, 3, 10, 19 | 1, 2, 5-9 |
| Y | claims, paragraphs [0013], [0021], [0036], examples 2, 3, 10, 19 | 1-9 |
| Y<br>A | EP 0334091 B1 (VARTA BATTERIE) 27 January 1993 (1993-01-27) claims, page 4, right column | 1-4, 7-9<br>5, 6 |
| Y<br>A | JP 49-76971 A (MATSUSHITA ELECTRIC WORKS, LTD.) 24 July 1974 (1974-07-24) claims, page 2, upper left column, example 3 | 1-4, 7-9<br>5-6 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 April 2021 (06.04.2021) | 20 April 2021 (20.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/003926

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 1-296161 A (MATSUSHITA ELECTRIC WORKS, LTD.) 26 December 1986 (1986-12-26) claims, examples | 1-4, 7-9<br>5, 6 |
| Y<br>A | JP 2018-199881 A (NISSIN CHEMICAL CO., LTD.) 20 December 2018 (2018-12-20) claims, examples, comparative examples | 1, 2, 4-9<br>3 |
| Y | WO 2004/085729 A1 (SANYO CHEMICAL INDUSTRIES, LTD.) 07 October 2004 (2004-10-07) claims, examples | 1-9 |

Form PCT/ISA/210 (continuation of second sheet) (January 2015)

**INTERNATIONAL SEARCH REPORT**
Information on patent family members

International application No.
PCT/JP2021/003926

| Patent Documents referred in the Report | Publication Date | Patent Family | Publication Date |
|---|---|---|---|
| JP 2011-506731 A | 03 Mar. 2011 | WO 2009/080696 A2 claims, pp. 4, 7, 8, 11, 12, examples 2, 3, 10, 19<br>US 2010/0330376 A1<br>EP 2222759 A2<br>KR 10-2010-0099306 A<br>CN 101945928 A | |
| EP 0334091 B1 | 27 Jan. 1993 | DE 3810125 A1 | |
| JP 49-76971 A | 24 Jul. 1974 | (Family: none) | |
| JP 61-296161 A | 26 Dec. 1986 | (Family: none) | |
| JP 2018-199881 A | 20 Dec. 2018 | CN 108930094 A<br>KR 10-2018-0130449 A | |
| WO 2004/085729 A1 | 07 Oct. 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S58070760 A
- JP 2005299013 A
- JP 2006089906 A
- JP 2011153395 A
- WO 2005092814 A
- JP 2012136385 A
- JP 2016108707 A
- JP 2016108708 A
- JP S60046951 A